**Europäisches Patentamt**

**European Patent Office**

**Office européen des brevets**

(19)

(11) Numéro de publication : **0 157 680 B2**

(12) ## NOUVEAU FASCICULE DE BREVET EUROPEEN

(45) Date de publication du nouveau fascicule du brevet : **18.09.91 Bulletin 91/38**

(51) Int. Cl.$^5$ : **B29C 47/60, B30B 11/24**

(21) Numéro de dépôt : **85400485.0**

(22) Date de dépôt : **13.03.85**

(54) Elément de vis pour une machine de traitement de matière.

(30) Priorité : **16.03.84 FR 8404055**

(43) Date de publication de la demande :
**09.10.85 Bulletin 85/41**

(45) Mention de la délivrance du brevet :
**04.03.87 Bulletin 87/10**

(45) Mention de la décision concernant
l'opposition :
**18.09.91 Bulletin 91/38**

(84) Etats contractants désignés :
**AT BE CH DE GB IT LI SE**

(56) Documents cités :
**DE-A- 1 502 337**
**DE-A- 3 232 018**

(56) Documents cités :
**DE-B- 2 340 499**
**DE-C- 2 607 684**
**FR-A- 1 284 924**
**FR-A- 2 042 191**
**FR-A- 2 293 301**

(73) Titulaire : **CLEXTRAL**
**15 rue Pasquier**
**F-75008 Paris (FR)**

(72) Inventeur : **Vannier, Jean**
**Les Charmilles-Mesvres**
**F-71190 Etang-Sur-Arroux (FR)**
Inventeur : **Mourrier, Francis**
**5 rue Racine**
**F-71400 Autun (FR)**

(74) Mandataire : **Polus, Camille et al**
**c/o Cabinet Lavoix 2, Place d'Estienne d'Orves**
**F-75441 Paris Cedex 09 (FR)**

EP 0 157 680 B2

**Description**

L'invention a pour objet un élément de vis utilisable dans une machine de traitement de matière, par exemple une machine d'extrusion de matière plastique, selon le préambule de la revendication 1.

Une extrudeuse est constituée normalement d'une ou plusieurs vis entrainées en rotation à l'intérieur d'un fourreau allongé dans lequel sont ménagés des alésages cylindriques pour le logement des vis. Celles-ci sont munies, sur leur périphérie, de filets en hélice qui entrainent vers l'aval la matière introduite par une extrémité amont du fourreau. En jouant sur le pas des vis, on peut soumettre la matière à des effets de trituration, de compression, de malaxage, par exemple pour produire la polymérisation, dans le cas de granulés de matière plastique. La matière est ainsi entrainée jusqu'à l'extrémité aval du fourreau qui peut être muni d'une filière d'extrusion ou bien d'un simple orifice de sortie dans le cas où la matière ne doit pas être soumise à une extrusion.

Pour faire varier le traitement réalisé au cours de l'avancement de la matière dans le fourreau, les vis sont constituées de zones successives ayant des filets de pas ou de formes différentes. Par exemple, on pourra utiliser des sections de convoyage à pas large à l'entrée de la machine pour réaliser un entrainement rapide vers l'aval ou bien, le long du fourreau pour réaliser une détente ou un dégazage de la matière. Dans d'autres sections, les filets auront un pas resserré ou même inversé pour réaliser un freinage et par conséquent une compression de la matière. Les filets à pas inversés peuvent être munis d'ouverture controlant le passage vers l'aval d'une certaine quantité de matière et augmentant l'effet de trituration.

Il est souvent nécessaire de modifier l'arrangement des sections à pas différents, par exemple pour réaliser un changement ou une adaptation du processus de traitement. D'autre part, les filets peuvent être détériorés ou soumis à une usure importante par exemple dans le cas où la matière transportée est particulièrement abrasive. Cette usure est évidemment plus importante dans les zones les plus comprimées.

Il est donc nécessaire de pouvoir changer ou remplacer certaines sections des vis et c'est pourquoi comme décrit dans le FR-A-2 042 191, celles-ci sont généralement constituées d'éléments creux juxtaposés et enfilés sur un arbre central relié à un moteur d'entrainement en rotation. Pour que la rotation de l'arbre soit transmise aux éléments de vis, ceux-ci sont munis, sur leur paroi interne, de rainures qui s'engagent dans des cannelures correspondantes ménagées le long de l'arbre central. Au cours de la rotation, les rainures sont soumises à des efforts de cisaillement importants, parfois à des chocs et l'élément de vis doit donc être constitué d'un métal susceptible de résister à de tels efforts. D'autre part, les parois des filets sont soumises à une abrasion du fait de l'entraînement de la matière et, pour augmenter leur résistance à l'abrasion, on les soumet généralement à un traitement de surface, par exemple en les recouvrant d'un métal anti-abrasion. Ce recouvrement doit être renouvelé périodiquement et cette opération est onéreuse d'autant plus que la paroi des filets doit être usinée avec précision, notamment dans les machines à deux vis qui engrènent l'une dans l'autre.

On connait dans le DE-A-1 502 337 un élément de vis creux utilisable dans une machine de traitement de matière qui comprend au moins une vis entraînée en rotation à l'intérieur d'un fourreau allongé et constituée d'un arbre central sur lequel sont enfilés une pluralité d'éléments de vis creux munis, sur leur paroi interne, de rainures s'engageant dans des cannelures correspondantes de l'arbre central et, sur leur périphérie, d'organes de traitement de la matière, tel que des filets hélicoïdaux, l'élément de vis étant constitué d'un machon interne sur la paroi interne duquel sont ménagées les rainures correspondant aux cannelures de l'arbre et réalisé en un matériau résistant aux contraintes mécaniques d'entraînement et solidaires en rotation et enfilé sans jeu dans un manchon externe réalisé en un matériau susceptible de résister à l'abrasion de la matière traitée, et sur lequel sont ménagés dans la masse les filets hélicoïdaux ou autres organes périphériques de traitement de matière, le manchon interne et le manchon externe étant symétriques par rapport à un plan médian perpendiculaire à l'axe

L'invention a pour objet un nouveau mode de réalisation d'éléments de vis.

Selon l'invention l'élément de vis creux utilisable dans une machine de traitement de matière qui comprend au moins une vis entrainée en rotation à l'intérieur d'un fourreau allongé et constituée d'un arbre central d'entraînement sur lequel sont enfilés une pluralité d'éléments de vis creux munis, sur leur paroi interne de rainures s'engageant dans des cannelures correspondantes de l'arbre central et, sur leur périphérie, d'organes de traitement de la matière tels que des filets hélicoïdaux. l'élément de vis étant constitué d'un manchon interne sur la paroi interne duquel sont ménagées les rainures correspondant aux cannelures de l'arbre et réalisé en un matériau résistant aux contraintes méacaniques d'entraînement et solidaire en rotation et enfilé sans jeu dans un manchon externe réalisé en un matériau susceptible de résister à l'abrasion de la matière traitée et sur lequel sont ménagés dans la masse les filets hélicoïdaux ou autres organes périphériques de traitement de matière, le manchon interne et le manchon externe étant symétriques par rapport à un plan médian perpendiculaire à l'axe, est caractérisé en ce que le manchon interne est cylindrique et a une longueur inférieure à celle du manchon externe de façon à

ménager aux deux extrémités de l'élément, deux demi-gorges de hauteur égale à l'épaisseur du manchon interne, les demi-gorges en vis à vis de deux éléments accolés formant un logement circulaire pour un joint d'étanchéité interposé entre les éléments de vis.

Sur les figures annexées, on a représenté sché-matiquement un mode de réalisation d'un élément de vis selon l'invention.

La figure 1 est une vue schématique, en coupe axiale, d'éléments filetés de deux vis engrenant l'une dans l'autre.

La figure 2 est une vue de détail de la jonction entre deux éléments adjacents.

La figure 3 est une vue en coupe transversale selon AA de la figure 2.

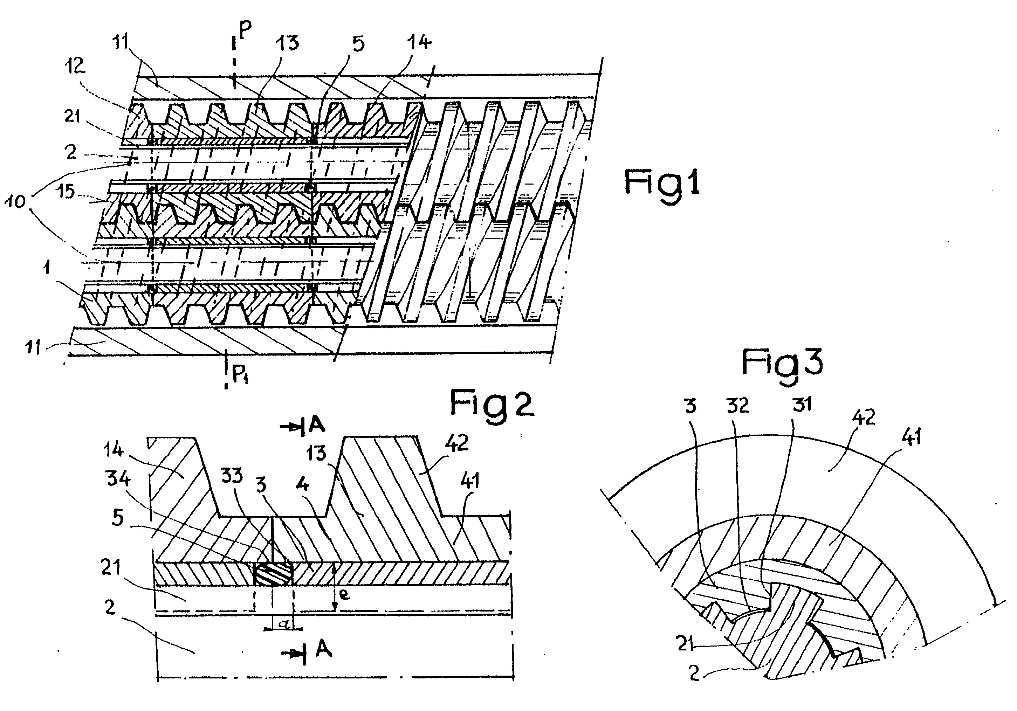

Sur la figure 1, on a représenté une partie d'une machine de traitement comportant deux vis 1 à axes 10 parallèles, engrenant l'une dans l'autre et entrai-nées en rotation à l'intérieur d'un fourreau 11 qui les enveloppe. Chaque vis est constituée d'un certain nombre d'éléments juxtaposés tels que 12, 13 et 14 qui sont enfilés sur un arbre 2 entraîné en rotation autour de son axe 10 par un moyen non représenté sur la figure. A cet effet, les éléments de vis tels que 13 sont munis d'un alésage interne sur lequel sont ménagées des rainures longitudinales s'engageant sur des cannelures 21 de l'arbre 2 permettant de transmettre le couple de rotation aux éléments filetés.

Comme on le voit en détail sur les figures 2 et 3, chaque élément tel que 13 est constitué par un man-chon interne cylindrique 3 entouré par un manchon externe 4.

Le manchon interne 3 est réalisé en un acier sus-ceptible de résister aux contraintes mécaniques dues au couple d'entraînement appliqué par les cannelures 21 de l'arbre sur des rainures correspondantes 31 ménagées sur la paroi intérieure 32 du manchon 3.

Le manchon externe 4 est constitué en une seule pièce par un métal anti-abrasion tel qu'une fonte alliée ou un alliage à base de cobalt ou de nickel. Il comprend un corps cylindrique 41 sur la périphérie duquel sont formés dans la masse des filets de vis 42 ou bien, dans certaines applications, d'autres organes périphériques de traitement de la matière. Les métaux anti-abrasion sont souvent peu résilients et résistent donc mal aux contraintes de cisaillement qui apparaissent dans les cannelures transmettant le couple de rotation. C'est pourquoi, le manchon externe 4 est solidarisé en rotation avec le manchon interne 3 par exemple par un frettage réalisé à chaud ou par collage, par soudage ou par brasage. Les filets 42, en revanche, ne sont pas soumis à des efforts de cisaillement importants étant donné que la pression exercée par la matière se répartit sur la périphérie du filet dont la section peut d'ailleurs être étudiée en conséquence. C'est pourquoi, le filet 42 peut être réalisé dans la masse en un métal anti-abrasion même si de tels métaux n'ont pas de caractéristiques très élevées de ductilité. En revanche, du fait que le man-chon externe est réalisé intégralement en un métal anti-abrasion, il n'est plus nécessaire de remplacer aussi souvent les éléments de vis comme on le faisait auparavant pour reconstituer le revêtement anti-abrasion de faible épaisseur qui, dans les modes de réalisation classiques recouvre les filets. On notera d'ailleurs que, souvent, on recouvre-seulement les sommets et les flancs des filets et non pas le fond de ceux-ci alors que, dans le mode de réalisation selon l'invention, l'ensemble du filet résiste a l'abrasion. Ceci est particulièrement avantageux dans les machines à deux vis dans lesquelles le fond du filet peut être soumis lui aussi à une abrasion importante, notamment dans les zones 15 d'engrènement des vis.

Un autre avantage réside dans le fait que le manchon externe 4 peut être facilement réalisé par mou-lage. En effet, la forme des filets se prête bien à un moulage de précision, par exemple par un procédé à la cire perdue ou un moulage céramique, donnant la géométrie de la pièce avec le minimum d'usinage de finition. Dans ces cas, seul l'alésage central du corps cylindrique 41 doit être effectué par usinage.

Selon l'invention le manchon interne 3 et le manchon externe 4 sont symétriques par rapport au plan médian P de l'élément et le manchon interne 3 a une longueur un peu inférieure à celle du manchon externe 4. On définit ainsi à chaque extrémité de l'élé-ment de vis une demi-gorge 33 ayant une hauteur égale à l'épaisseur (e) du manchon interne 3 et une largeur (a) égale à la moitié de la différence de lon-gueur entre les deux manchons. De la sorte, lorsque les éléments adjacents sont accolés, les deux demi-gorges 33 et 34 placées en vis-a-vis forment un logement annulaire de largeur 2a, dans lequel on peut placer un joint d'étanchéité circulaire 5 dont la hauteur correspond à l'épaisseur (e) du manchon interne 3 diminuée de la profondeur des rainures 31. Les joints 5 et leur logement sont ainsi symétriques par rapport aux plans $P_1$ de jonction des éléments adjacents qui, étant eux-mêmes symétriques, peuvent être facile-ment retournés après usage pour être utilisés dans l'autre sens.

Bien entendu, l'invention ne se limite pas au seul mode de réalisation qui a été représenté, mais couvre également les variantes restant dans le cadre de protection revendiqué. En particulier, le mode de réalisa-tion qui vient d'être décrit en deux manchons concentriques réalisés en métaux différents pourrait être utilisé également lorsque les organes de traitement de la matière placés à la périphérie de l'élément ne sont pas des filets de vis mais par exemple des bras de malaxage ou des disques excentrés. En effet, malgré l'augmentation initiale de prix résultant de la masse relativement importante réalisée en alliage anti-abrasion, le procédé sera intéressant dans de nombreux cas, notamment lorsque l'usure par abrasion est très importante, grâce à l'économie réalisée au cours du fonctionnement, notamment par des arrêts moins fréquents pour démontage et rechargement du revêtement anti-abrasion.

## Revendications

1. Elément de vis creux utilisable dans une machine de traitement de matière qui comprend au moins une vis entraînée en rotation à l'intérieur d'un fourreau allongé (11) et constituée d'un arbre central d'entraînement (2) sur lequel sont enfilés une pluralité d'éléments de vis creux (12, 13...) munis, sur leur paroi interne de rainures (31) s'engageant dans des cannelures correspondantes (21) de l'arbre central (2) et, sur leur périphérie, d'organes de traitement de la matière tels que des filets hélicoïdaux, l'élément de vis étant constitué d'un manchon interne (3) sur la paroi interne (22) duquel sont ménagées les rainures (31) correspondant aux cannelures (21) de l'arbre et réalisé en un matériau résistant aux contraintes mécaniques d'entraînement et solidaire en rotation et enfilé sans jeu dans un manchon externe (4) réalisé en un matériau susceptible de résister à l'abrasion de la matière traitée et sur lequel sont ménagés dans la masse les filets hélicoïdaux (42) ou autres organes périphériques de traitement de matière, le manchon interne (3) et le manchon externe (4) étant symétriques par rapport à un plan médian (P) perpendiculaire à l'axe (10), caractérisé en ce que le manchon interne (3) est cylindrique et a une longueur inférieure à celle du manchon externe (4) de façon à ménager aux deux extrémités de l'élément (1), deux demi-gorges (33, 34) de hauteur égale à l'épaisseur(e) du manchon interne (3), les demi-gorges (33, 34) en vis à vis de deux éléments accolés (12, 13) formant un logement circulaire pour un joint d'étanchéité (5) interposé entre les éléments de vis (12, 13).

## Patentansprüche

1. Hohlschneckenelement für eine Materialbehandlungsvorrichtung, welche wenigstens eine Schnecke umfaßt, die im Inneren eines langgestreckten Gehäuses (11) drehend angetrieben ist und aus einer zentralen Antriebswelle (2) besteht, auf welche eine Mehrzahl von Hohlschneckenelementen (12, 13 ...) aufgesteckt ist, die an ihrer Innenwand mit in entsprechende Riefungen (21) der zentralen Welle (2) eingreifenden Rillen (31) und an ihrem Umfang mit Materialbearbeitungsorganen, beispielsweise Schneckenstegen, versehen sind, wobei das Schneckenelement aus einer zylindrischen, aus einem gegen mechanische Antriebsbelastungen resisten Werkstoff hergestellten Innenmanschette (3) besteht, an deren Innenwand (32) die den Riefungen (21) der Welle entsprechenden Rillen (31) ausgespart sind, und die mit drehfester Verbindung spielfrei in eine Außenmanschette (4) eingeschoben ist, welche ihrerseits aus einem gegen den Abrieb des behandelten Materials widerstandsfähigen Werkstoff hergestellt ist und auf welcher in der Masse die Schneckenstege (42) oder andere periphere Materialbehandlungsorgane ausgespart sind, und wobei die Innenmanschette (3) und die Außenmanschette (4) mit Bezug auf eine zur Achse (10) senkrechte Mittelebene (P) symmetrisch sind, **dadurch gekennzeichnet**, daß die Innenmanschette (3) zylindrisch ist und eine geringere Länge als die Außenmanschette (4) hat derart, daß an den beiden Enden des Elements (1) zwei Halbkehlen (33, 34) ausgespart sind, deren Höhe gleich der Dicke (e) der Innenmanschette (3) ist, wobei die Halbkehlen (33, 34) gegenüber von zwei aneinanderstoßenden Elementen (12, 13) eine kreisförmige Aufnahme für eine zwischen die Schneckenelemente (12, 13) eingelegte Dichtung (5) bilden.

## Claims

1. A hollow screw element of use in a material-processing machine comprising at least one screw which is driven in rotation inside an elongated sleeve (11) and includes a central driving shaft (2) on which are mounted a plurality of hollow screw elements (12, 13 ... ) provided on their inner wall with grooves (31) engaging in corresponding splines (21) on the central shaft (2) and provided on their periphery with material-processing means, such as helical threads, the screw element being comprised of an inner collar (3) on the inner wall (22) of which are formed grooves (31) corresponding to the splines (21) of the shaft, and formed of a material which is resistant to mechanical drive stresses, and integral in rotation, and fitted without clearance in an outer collar (4), made from a material capable of resisting the abrasion of the processed material, and on which there are integrally provided the helical threads (42) or other peripheral material-processing means, the inner collar (3) and the outer collar (4), being symmetrical in relation to a median plane (P) which is perpendicular to the axis (10), characterised in that the inner collar (3) is cylindrical and has a length which is less than that of the outer collar (4) so as to define, at both ends of the screw element (1), two semi-grooves (33,34) having a height equal to the thickness (e) of the inner collar (3), the semi-grooves (33,34) opposite two adjoining screw elements (12,13) defining a circular recess for a sealing gasket (5) interposed between the screw elements (12,13).

Fig1

Fig2

Fig3

EP 0 157 680 B2